**Europäisches Patentamt**

**European Patent Office**

**Office européen des brevets**

(19)

(11) **EP 1 173 490 B1**

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(21) Anmeldenummer: **00936690.7**

(22) Anmeldetag: **07.04.2000**

(51) Int Cl.$^7$: **C08F 222/20**

(86) Internationale Anmeldenummer:
**PCT/EP2000/003141**

(87) Internationale Veröffentlichungsnummer:
**WO 2000/063264 (26.10.2000 Gazette 2000/43)**

(54) **COPOLYMERE MIT AMPHIPHILEN UNTEREINHEITEN, VERFAHREN ZU DEREN HERSTELLUNG UND DEREN VERWENDUNG**

COPOLYMERS WITH AMPHIPHILIC SUB-UNITS, A METHOD FOR PRODUCING THE SAME AND THE USE THEREOF

COPOLYMERES AVEC SOUS-UNITES AMPHIPHILES, LEUR PROCEDE DE PRODUCTION ET LEUR UTILISATION

(84) Benannte Vertragsstaaten:
**AT BE CH CY DE DK ES FI FR GB GR IE IT LI LU MC NL PT SE**

(30) Priorität: **16.04.1999 DE 19917356**

(43) Veröffentlichungstag der Anmeldung:
**23.01.2002 Patentblatt 2002/04**

(73) Patentinhaber: **Henkel Kommanditgesellschaft auf Aktien**
**40589 Düsseldorf (DE)**

(72) Erfinder:
• **KLEIN, Johann**
  **D-40593 Düsseldorf (DE)**
• **BÖGE, Kai**
  **D-40217 Düsseldorf (DE)**
• **FRIEDRICH, Klaus**
  **D-32457 Porta Westfalica (DE)**
• **MÖLLER, Thomas**
  **D-40593 Düsseldorf (DE)**

(56) Entgegenhaltungen:
**EP-A- 0 011 806        EP-A- 0 930 395**
**WO-A-95/11341        DE-A- 19 609 789**
**DE-A- 19 754 315        US-A- 3 657 175**
**US-A- 4 075 411**

**Beschreibung**

Die Erfindung betrifft die Verwendung eines Copolymeren, erhältlich durch radikalische Copolymerisation von mindestens zwei Komponenten A und B, wobei

a) mindestens ein Ester einer mindestens difunktionellen und mindestens eine olefinisch ungesättigte Doppelbindung aufweisenden Carbonsäure mit mindestens einem Alkylenoxidaddukt als Komponente A und

b) mindestens ein weiteres radikalisch polymerisierbares Monomeres aus der Gruppe Vinylester von Carbonsäuren mit 2 bis 44 C-Atomen, Ethylen oder Propylen als Komponente B

eingesetzt wird.

Eigenschaften von Polymeren werden häufig bestimmten technischen Erfordernissen angepaßt, indem bei der Polymerisation ein Monomerengemisch verwendet wird. Die Polymerisation eines Gemischs aus zwei oder mehr Monomeren wird häufig als Copolymerisation bezeichnet und führt beispielsweise zu Coplymeren mit zwei unterschiedlichen Monomertypen oder zu Terpolymeren entsprechend der Verwendung von drei unterschiedlichen Monomertypen. In solchen Polymeren lassen sich häufig bestimmte technische Eigenschaften in Abhängigkeit vom gewählten Comonomerverhältnis und den gewählten Comonomeren einstellen.

So wird in der US 3,657,175 eine saure Latex-Zusammensetzung beschrieben, wobei das Copolymere aus einem Ester einer ethylenischen Polycarbonsäure und einem ethoxylierten Alkohol einerseits und Methacrylsäure sowie Styrol und/oder Butadien andererseits hergestellt wird. Diese Zusammensetzung wird als Verdicker verwendet.

Bei der Herstellung von Oberflächenbeschichtungen oder von Klebstoffen werden häufig Bindemittel eingesetzt, wie sie durch radikalische Polymerisation von einem oder mehreren radikalisch polymerisierbaren Monomeren erhältlich sind. Eigenschaftsvariationen werden in der Regel gemäß der oben angegebenen Verfahrensweise durchgeführt, d.h., durch Copolymerisation geeigneter Monomerer.

Aus dem Stand der Technik ist es bekannt, die Flexibilität solcher Filme, beispielsweise von Klebstofffilmen, durch Verwendung von Comonomeren wie Dibutylmaleinat, Vinylversatat oder Acrylatestem zu verbessern. Nachteilig wirkt sich bei der Verwendung solcher Comonomerer jedoch aus, daß sich die Haftung von solchen Filmen oder Verklebungen auf polaren Oberflächen aufgrund der Hydrophobie der Comonomeren oft stark verschlechtert. Zudem besteht bezüglich der Kettenlänge in den Alkoholresten der eingesetzten Comonomeren eine Obergrenze dahingehend, daß Comonomere mit langkettigen Resten in der Regel einer Verwendung in der Emulsionspolymerisation nicht mehr zugänglich sind, da ihre Wasserlöslichkeit zu schlecht ist.

Emulsionspolymerisationen, beispielsweise die Emulsionspolymerisation von Vinylacetat, erfordern häufig die Zugabe eines Schutzkolloids. Eine solcher Verfahrensschritt verzögert zum einen den Verfahrensablauf, zum anderen entstehen zusätzliche Kosten für den Herstellungsprozeß.

Der Erfindung lag daher die Aufgabe zugrunde, ein Copolymeres zur Verfügung zu stellen, das ohne aufwendige Arbeitsschritte herstellbar ist und bei einer Verwendung in Klebstoffen zu flexiblen Klebstofffilmen führt, die jedoch auch auf hydrophilen Substratoberflächen eine ausgezeichnete Haftung aufweisen.

Die oben genannten Aufgaben werden durch ein Copolymeres gelöst, das durch radikalische Copolymerisation von mindestens zwei Komponenten A und B erhältlich ist, wobei als Komponente A ein Carbonsäureester einer ungesättigten Carbonsäure mit einem Alkylenoxidaddukt und als Komponente B ein weiteres radikalisch polymerisierbares Monomeres eingesetzt wird.

Gegenstand der Erfindung ist damit die Verwendung eines Copolymeren, erhältlich durch radikalische Copolymerisation von mindestens zwei Komponenten A und B, wobei

a) mindestens ein Ester einer mindestens difunktionellen und mindestens eine olefinisch ungesättigte Doppelbindung aufweisenden Carbonsäure mit einem Alkylenoxidaddukt als Komponente A und
b) mindestens ein weiteres radikalisch polymerisierbares Monomeres aus der Gruppe Vinylester von Carbonsäuren mit 2 bis 44 C-Atomen, Ethylen oder Propylen als Komponente B

eingesetzt wird, als Bindemittel in Klebstoffzubereitungen, Dichtstoffen oder Redispersionspulvem.

Unter einem "Copolymeren" wird im Rahmen des vorliegenden Textes ein Polymeres verstanden, das durch radikalische Polymerisation von zwei oder mehr radikalisch polymerisierbaren Monomeren erhältlich ist. Es kann sich dabei um ein statistisches Copolymeres handeln, d. h., daß die Abfolge der Monomeren keiner besonderen Ordnung unterliegt, es kann sich jedoch auch um ein alternierendes oder ein Block-Copolymeres handeln.

Im Rahmen der vorliegenden Erfindung wird zur Herstellung der erfindungsgemäß verwendeten Copolymeren eine Komponente A und eine Komponente B copolymerisiert. Als Komponente A wird mindestens ein Ester einer mindestens difunktionellen und mindestens eine olefinisch ungesättigte Doppelbindung aufweisenden Carbonsäure mit einem Alkylenoxidaddukt eingesetzt.

Als mindestens difunktionelle Carbonsäuren, die mindestens eine olefinisch ungesättigte Doppelbindung aufweisen, eignen sich beispielsweise Maleinsäure, Fumarsäure, Itaconsäure, Arconitsäure, 3,4,5,6-Tetrahydrophthalsäure, Crotonsäure, oder ein Gemisch aus zwei oder mehr davon.

Um geeignete Ester herzustellen, wie sie im Rahmen der vorliegenden Erfindung als Komponente A einsetzbar sind, können die den Estem zugrundeliegenden, olefinisch ungesättigten Di- oder Polycarbonsäuren beispielsweise nur partiell verestert werden, d.h., es wird nur ein Teil der für eine Veresterung zur Verfügung stehenden Carbonsäuregruppen mit einem geeigneten Alkylenoxidaddukt verestert. Es ist darüber hinaus ebenso möglich, die Carbonsäuregruppen der Carbonsäure partiell oder vollständig mit einem Alkylenoxid umzusetzen, so daß die Esterfunktion durch Oxalkylierung gebildet wird.

Geeignete Partialester wie sie im Rahmen einer bevorzugten Ausführungsform der vorliegenden Erfindung als Komponente A eingesetzt werden, sind beispielsweise Partialester der oben genannten Carbonsäuren mit Alkylenoxidaddukten von linearen oder verzweigten, gesättigten Alkoholen, die mindestens 8 C-Atome aufweisen. Geeignete Alkohole sind beispielsweise die Fettalkohole mit mindestens 8 C-Atomen, wie sie beispielsweise durch Reduktion von natürlichen Fetten oder Ölen oder durch Reduktion von aus natürlichen Fetten oder Ölen erhältlichen Fettsäuren oder Fettsäureschnitten oder deren Derivaten, beispielsweise deren Estern mit Alkoholen mit 1 bis 4 C-Atomen, erhältlich sind.

Zur Herstellung der Alkylenoxidaddukte besonders geeignete Fettalkohole sind beispielsweise Octylalkohol, Nonylalkohol, Decylalkohol, Undecylalkohol, Dodecylalkohol, Tridecylalkohol, Tetradecylalkohol, Pentadecylalkohol, Hexadecylalkohol, Octadecylalkohol, Nonadecylalkohol, Guerbetalkohole, ungesättigte Fettalkohole wie 12-Hydroxystearylalkohol, oder höhere Homologe solcher Alkohole mit bis zu etwa 44 C-Atomen. Der Alkylrest der Fettalkohole kann linear oder verzweigt, gesättigt oder ungesättigt sein.

Ebenfalls als Alkoholkomponente zur Herstellung der Partialester geeignet sind beispielsweise Alkoxylenoxidaddukte von entsprechend alkoxylierbaren Verbindungen, die am Ende der durch die Alkoxylierung entstehenden Alkoxyeinheit eine OH-Gruppe aufweisen. Zur Herstellung der Alkylenoxidaddukte geeignete alkoxylierbare Verbindungen sind beispielsweise Dialkylamine mit linearen oder verzweigten, gesättigten oder ungesättigten Alkylresten mit insgesamt mindestens etwa 8 C-Atomen, lineare oder verzweigte, gesättigte oder ungesättigte Carbonsäuren, beispielsweise Fettsäuren, mit mindestens etwa 8 C-Atomen, lineare oder verzweigte, gesättigte oder ungesättigte Säureamide, beispielsweise Fettsäuremonoethanolamide, mit mindestens etwa 8 C-Atomen sowie lineare oder verzweigte, gesättigte oder ungesättigte Alkylamine, beispielsweise Fettamine, die im Alkylrest mindestens 8 C-Atome aufweisen.

Unter "Alkoxylaten" oder "Alkylenoxidaddukten" werden im Rahmen des vorliegenden Textes die Umsetzungsprodukte von geeigneten Nucleophilen, beispielsweise von entsprechend funktionalisierten Ethem, Aminen, Carbonsäuren, Carbonsäureamiden oder Alkoholen mit Alkylenoxiden mit 2 bis etwa 44 C-Atomen, insbesondere etwa 8 bis etwa 24 C-Atomen, verstanden.

In einer bevorzugten Ausführungsform der Erfindung werden zur Herstellung der Alkylenoxidaddukte Alkylenoxide mit 2 bis 4, insbesondere 2 oder 3 C-Atomen, beispielsweise Ethylenoxid oder Propylenoxid, eingesetzt. Zur Herstellung der Alkoxylierungsprodukte kann lediglich ein Alkylenoxid eingesetzt werden, es können jedoch auch zwei oder mehr Alkylenoxide eingesetzt werden. Bei einer Alkoxylierung mit mehr als zwei Alkylenoxiden kann die Alkoxylierung entweder zu einem statistischen oder einem alternierenden Copolyalkylenoxid oder zu einem Block-Copolyalkylenoxid führen.

In einer bevorzugten Ausführungsform der Erfindung wird die Alkoxylierung zum Alkylenoxidaddukt mit Ethylenoxid durchgeführt.

Die im Rahmen der vorliegenden Erfindung als Alkoholkomponente einsetzbaren Alkylenoxidaddukte weisen pro Molekül im Durchschnitt mindestens eine Alkylenoxideinheit auf. In einer bevorzugten Ausführungsform der Erfindung sollte die durchschnittliche Zahl an Alkylenoxideinheiten pro Alkoholmolekül mindestens etwa 1,5, insbesondere mindestens etwa 2 betragen.

Im Rahmen einer bevorzugten Ausführungsform der Erfindung werden als Komponente A die Partialester von olefinisch ungesättigten Dicarbonsäuren eingesetzt, die als Alkoholrest ein Alkoxylat eines Alkohols, einer Carbonsäure, eines Carbonsäureamids, eines Dialkylamins oder ein Monoalkoxylat eines Amins aufweisen. In einer weiteren bevorzugten Ausführungsform der Erfindung werden als Alkoholrest solche Alkoxylate eingesetzt, die durch Alkoxylierung der dem Alkoxylat zugrundeliegenden Verbindung mit Ethylenoxid oder Propylenoxid oder beidem erhältlich sind.

Die den Partialestem zugrundeliegenden Alkoholreste weisen in einer bevorzugten Ausführungsform der Erfindung amphiphile Eigenschaften auf. Amphiphile Eigenschaften lassen sich häufig durch den HLB-Wert der amphiphilen Verbindung charakterisieren.

Im Rahmen der vorliegenden Erfindung als zur Herstellung der Partialester geeignete Alkoholkomponenten weisen beispielsweise einen HLB-Wert von etwa 1,5 bis etwa 18, beispielsweise etwa 2 bis etwa 14 oder etwa 3 bis etwa 12 auf.

In einer bevorzugten Ausführungsform der Erfindung weist der dem Alkylenoxidaddukt zugrundeliegende nucleophile Rest etwa 12 bis etwa 24 C-Atome, beispielsweise etwa 16 bis etwa 20 C-Atome auf.

Die entsprechenden Alkylenoxidaddukte weisen etwa 1 bis etwa 40 Alkylenoxideinheiten, beispielsweise etwa 2 bis etwa 12 Ethylenoxid- oder Propylenoxideinheiten, oder beides auf

Die Partialester können in Form ihrer freien Säuren eingesetzt werden, es ist jedoch ebenso möglich die Partialester als Salze, beispielsweise als Alkalimetallsalze, oder Ammoniumsalze einzusetzen. Im Rahmen einer bevorzugten Ausführungsform der Erfindung werden Partialestersalze mit leichtflüchtigen Aminen eingesetzt, beispielsweise Salze mit Butylamin oder Triethanolamin. Die Salzbildung kann vor oder nach der Polymerisation durchgeführt werden.

Neben den bereits beschriebenen Partialestem können in einer weiteren Ausführungsform der Erfindung als Komponente A Ester von ungesättigten, mindestens difunktionellen Carbonsäuren eingesetzt werden, die keine Carboxylgruppe aufweisen (Vollester), d.h., deren Carboxylgruppen vollständig verestert sind.

Solche Vollester weisen als Alkoholrest mindestens ein Alkylenoxidaddukt mit einem linearen oder verzweigten, gesättigten oder ungesättigten Alkylrest mit mindestens etwa 8 C-Atomen auf, der zwischen dem genannten Alkylrest und der aus der ungesättigten Carbonsäure stammenden Esterfunktion mindestens 1 bis etwa 40 Alkylenoxideinheiten, beispielsweise etwa 2 bis etwa 12 Alkylenoxideinheiten, aufweist. Geeignete Alkylenoxidaddukte wurden bereits oben erwähnt. In einer bevorzugten Ausführungsform der Erfindung handelt es sich bei den Alkylenoxideinheiten um Ethylenoxideinheiten oder Propylenoxideinheiten oder deren Gemisch, insbesondere jedoch um Ethylenoxideinheiten.

Unter einem HLB-Wert wird ein Maß für die Wasser- bzw. Öllöslichkeit von vorwiegend nichtionischen Tensiden verstanden. Insbesondere für Ethoxylate und deren Ester gilt die Formel HLB = (E + P) / 5, wobei E für die Zahl der Etyhlenoxideinheiten und P für die Zahl an Propylenoxideinheiten (Angabe in Gew.-%) im Molekül stehen. Der HLB-Wert eines Tensid- oder Emulgatorgemischs läßt sich aus den Werten seiner Bestandteile additiv berechnen. Ausführliche Listen von HLB-Werten von im Handel erhältlichen Emulgatoren finden sich beispielsweise bei Fiedler, Lexikon der Hilfsstoffe für Pharmazie, Kosmetik oder angrenzende Gebiete oder bei Kirk-Othmer (3.) 8, 910-918.

Die Herstellung der als Komponente A einsetzbaren Halb- oder Vollester erfolgt nach den üblichen Regeln der organischen Chemie und ist dem Fachmann bekannt. In einer bevorzugten Ausführungsform der Erfindung wird der Halbester aus einem Carbonsäureanhydrid durch Zugabe des entsprechenden Alkylenoxidaddukts gebildet. Wenn als Komponente A ein Halbester eingesetzt werden soll, so kann die Bildung des Halbesters beispielsweise in situ vor oder sogar während der Copolymerisation der Komponenten A und B erfolgen, indem man ein entsprechendes Carbonsäureanhydrid und ein entsprechendes Alkylenoxidaddukt oder ein Gemisch aus zwei oder mehr Alkylenoxidaddukten in der bereits vorgelegten Komponente B löst.

Als Komponente B wird im Rahmen der vorliegenden Erfindung mindestens ein weiteres radikalisch polymerisierbares Monomeres eingesetzt. Geeignete Monomere sind beispielsweise die Vinylester von Carbonsäuren mit etwa 2 bis etwa 44 C-Atomen. Geeignete Vinylester sind beispielsweise Vinylacetat, Vinylpropionat, Vinylbutyrat, die Vinylester der isomeren Pentansäuren, Hexansäuren, Heptansäuren, Oktansäuren, Nonansäuren, Dekansäuren und deren höhere Homologe. Ebenfalls als Komponente B geeignet sind beispielsweise Ethylen oder Propylen.

Bei der Copolymerisation der Komponenten A und B liegt die Komponente A im zu copolymerisierenden Polymerisationsgemisch in einer Menge von etwa 0,01 bis 70 Gew.-%, beispielsweise in einer Menge von 0,5 bis etwa 50 Gew.-% oder etwa 1 bis etwa 20 Gew.-%, in Bezug auf die gesamte Mischung, vor. Im Rahmen einer weiteren bevorzugten Ausführungsform der Erfindung wird als Komponente B Vinylacetat, Vinylpropionat, Vinyllaurat oder Vinylversatat, insbesondere Vinylacetat, eingesetzt.

In einer weiteren bevorzugten Ausführungsform der Erfindung wird als Komponente B ein Gemisch aus zwei oder mehr copolymersierbaren Monomeren eingesetzt. Geeignet sind beispielsweise Gemische von Vinylacetat Vinylpropionat, Vinyllaurat oder Vinylversatat, jeweils mit einem oder mehreren der weiteren oben angegebenen Monomeren.

Werden als Komponente B Gemische aus zwei oder mehr Monomeren eingesetzt, so enthält das Gemisch im Rahmen einer bevorzugten Ausführungsform mindestens einen Vinylester einer Carbonsäure, insbesondere Vinylacetat. Der Anteil an Vinylester einer Carbonsäure sollte in einem solchen Gemisch mindestens etwa 30 Gew.-% betragen.

Die Herstellung der erfindungsgemäß verwendeten Copolymeren kann nach den üblichen Verfahren der radikalischen Polymerisation erfolgen. Bevorzugt wird die Polymerisation als Emulsions- oder Suspensionspolymerisation in Wasser durchgeführt. Die Polymerisationstemperatur beträgt vorzugsweise etwa 50 bis etwa 90°C, insbesondere etwa 75 bis etwa 85°C.

Als Emulgatoren können die im Rahmen der Emulsionspolymerisation üblicherweise eingesetzten Emulgatoren verwendet werden. Gegebenenfalls kann ein Schutzkolloid zugesetzt werden.

Als Startermoleküle, d.h., zur Initiierung der radikalischen Polymerisation, werden übliche wasserlösliche Radikalstarter zugegeben, bei der Suspensionspolymerisation können lipophile Radikalstarter zugegeben werden.

Ebenfalls Gegenstand der Erfindung ist die Verwendung des Copolymeren, wobei zur Herstellung des Copolymeren mindestens zwei Komponenten A und B copolymerisiert werden, wobei

a) mindestens ein Ester einer mindestens difunktionellen und mindestens eine olefinisch ungesättigte Doppelbindung aufweisenden Carbonsäure mit einem Alkylenoxidaddukt als Komponente A und
b) mindestens ein weiteres radikalisch polymerisierbares Monomeres als Komponente B

eingesetzt wird.

Die erfindungsgemäß verwendeten Copolymeren werden beispielsweise in Klebstoffzubereitungen wie Dispersionsklebstoffen, Haftklebstoffen, bei der Herstellung von Klebstofilmen oder zur Herstellung von Redispersionspulvern eingesetzt.

Gegenstand der Erfindung ist daher auch die Verwendung des Copolymeren in einer Zubereitung, die mindestens 0,1 Gew.-% des Copolymeren enthält.

Wenn zur Herstellung der Komponente A Alkylenoxidaddukte mit olefinisch ungesättigten Doppelbindungen eingesetzt werden, so können die erfindungsgemäß verwendeten Zubereitungen zusätzlich noch Sikkative enthalten.

Eine erfindungsgemäß verwendete Zubereitung kann neben den erfindungsgemäßen Copolymeren noch bis zu etwa 50 Gew.-% an üblichen Zusatzstoffen enthalten. Solche Zusatzstoffe können beispielsweise die Klebeigenschaften, das Alterungsverhalten, den Abbindevorgang oder die Adhäsion beeinflussen. So kann der Klebstoff beispielsweise sogenannte Tackifier-Harze enthalten, die sich in der Regel in natürliche und synthetische (Kunstharze) unterteilen lassen. Hierzu zählen beispielsweise Alkydharze, Epoxydharze, Melaminharze, Phenolharze, Urethanharze, Kohlenwasserstoffharze sowie natürliche Harze wie Colophonium, Holzterpentinöl und Tallöl. Zu den synthetischen Harzen Kohlenwasserstoffharze, Ketonharze, Cumaron-Indenharze, Isocyanatharze und Terpen-Phenolharze.

Weiterhin können die erfindungsgemäß als Klebstoffe verwendeten Zubereitungen Lösemittel enthalten. Als Lösemittel geeignet sind beispielsweise ein- oder mehrwertige Alkohole mit etwa 2 bis etwa 10 C-Atomen.

Weiterhin können die erfindungsgemäß als Klebstoffe verwendeten Zubereitungen Entschäumer enthalten. Als Entschäumer geeignet sind beispielsweise Entschäumer auf Fettalkoholbasis oder auf Silikonbasis.

Weiterhin können die erfindungsgemaß als Klebstoff verwendeten Zubereitungen Schutzkolloide wie Polyvinylpyrrolidone, Polyvinylalkohole oder Cellulose oder Cellulosederivate enthalten.

Weiterhin kann die erfindungsgemäß als Klebstoff verwendete Zubereitung als Zusatzstoffe Stabilisatoren oder Antioxidantien enthalten. Hierzu zählen in der Regel die Phenole, beispielsweise die sterisch gehinderten Phenole hohen Molekulargewichts, polyfunktionelle Phenole, schwefelund phosphorhaltige Phenole oder Amine. Als Stabilisatoren geeignet sind beispielsweise Hydrochinon, Hydrochinonmethylether 2,3-(Di-tert.-butyl)hydrochinon, 1,3,5-Trimethyl-2,4,6-tris(3,5-di-tert-butyl-4-hydro-xybenzyl)benzol; Pentaerythrittetrakis-3-(3,5-di-tert-butyl-4-hydroxyphenyl)-propionat; n-Octadecyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Ditert-butylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-ditert-butyl-4-hydro-xyphenyl)propionat]; sowie p-Hydroxydiphenylamin oder N,N'-Diphenylen-diamin oder Phenothiazin.

Die erfindungsgemäß als Klebstoff verwendete Zubereitung kann weiterhin Weichmacher wie Benzoatweichmacher, Phosphatweichmacher, flüssige Harzderivate oder pflanzliche und tierische Öle enthalten. Geeignet sind beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Ebenfalls geeignet sind Weichmacher auf Basis von Phthalsäure, insbesondere die Alkylphthalate.

Die erfindungsgemäß als Klebstoff verwendete Zubereitung kann weiterhin Farbstoffe wie Titandioxid, Füllstoffe wie Gips, Talkum, Ton und dergleichen sowie Pigmente enthalten.

Weiterhin können die erfindungsgemäß als Klebstoffe verwendeten Zubereitungen Emulgatoren oder Stabilisatoren oder deren Gemisch enthalten. Als Emulgatoren eignen sich in der Regel Tenside, die eine hydrophile und eine hydrophobe Gruppe aufweisen. Es kann sich dabei um anionische Emulgatoren, kationische Emulgatoren oder amphotere Emulgatoren handeln. Geeignet sind beispielsweise Kohlenwasserstoffemulgatoren mit etwa 6 bis etwa 22 Kohlenstoffatomen, wobei die Kohlenwasserstoffkette verzweigt, unverzweigt, gesättigt, ungesättigt, substituiert, aliphatisch oder aromatisch sein kann.

Ein weiterer Gegenstand der Erfindung ist vorzugsweise die Verwendung als Bindemittel in Klebstoffzubereitungen.

Die Erfindung wird nachfolgend durch Beispiele näher erläutert.

Experimenteller Teil

**Herstellung von Maleinsäure-C12/14-Fettalkohol x 4 EO-halbester**

367 g Maleinsäureanhydrid (3,74 mol) und 800 g Dehydol LS 4 (C12/14-Fettalkohol x 4 EO, 3,74 mol) werden unter Stickstoff 3 Stunden bei 120 °C gerührt. Nach dem Abkühlen erhält man 1150 g des Halbesters als pastöse Masse.

SZ = 139 mg KOH/g

**Beispiel 1**

**Herstellung einer Copolymer-Dispersion aus Vinylacetat und Maleinsäre-C12/14-Fettalkohol x 4 EO-halbester**

In 862 g einer auf 75 - 80 °C erhitzten Vorlösung von 809 g entsalztem Wasser, 1,8 g Nonylphenol mit 9,5 mol EO, 20 g Sulfobernsteinsäurebis-2-ethylhexylester-Natriumsalz, 1,4 g Natriumhydrogencarbonat und 30 g teilverseiftem Polyvinylalkohol werden unter Rühren 16 g einer Starterlösung aus 6 g Kaliumperoxodisulfat und 110 g Wasser gegeben. Dann werden unter Rückfluß bei dieser Temperatur über 5 h gleichzeitig die restliche Starterlösung (100 g) und die Monomerlösung bestehend aus 914 g Vinylacetat und 102 g des Maleinsäurehalbester zugetropft. Bei Dosierung wird darauf geachtet, daß die Temperatur 85 °C nicht übersteigt. Nach Abtrennung der grobteiligen Bestandteile durch Filtration erhält man ca. 1950 g einer Polymerdispersion mit folgenden Eigenschaften:

| pH-Wert | 2,5 bis 3,5 |
|---------|-------------|
| Festkörper | ca. 55 % |
| Viskosität | 11.000 mPas |

**Beispiel 2**

**Herstellung einer Homopolymer-Dispersion mit Vinylacetat**

In 893,2 g einer auf 75-80°C erhitzten Vorlösung von 799 g entsalztem Wasser, 1,8 g Nonylphenol mit 9,5 mol EO, 20 g Sulfobernsteinsäurebis-2-ethylhexylester-Natrium-Salz, 1,4 g Natriumhydrogencarbonat und 71 g teilverseiftem Polyvinylalkohol werden unter Rühren 10 g einer Starterlösung aus 4 g Kaliumperoxodisulfat und 76 g Wasser gegeben. Dann werden unter Rückfluß bei dieser Temperatur über 5 h gleichzeitig die restliche Starterlösung (70 g) und 816 g Vinylacetat zugetropft. Bei Dosierung wird darauf geachtet, daß die Temperatur 85°C nicht übersteigt. Nach Abtrennung der grobteiligen Bestandteile durch Filtration erhält man ca. 1760 g einer Polymerdispersion mit folgenden Eigenschaften:

| pH-Wert | 5,5 |
|---------|-----|
| Festkörper | ca. 51% |
| Viskosität | 9.000 mPas |

**Vergleich der Eigenschaften:**

| | Copolymer- Dispersion (Beispiel 1) | Homopolymer- Dispersion (Beispiel 2) |
|---|---|---|
| D1* | 12 N/mm$^2$ | 11,2 N/mm$^2$ |
| Reißkraft | 4,5 N/mm$^2$ | 15 N/mm$^2$ |
| Reißdehnung | 2200 % | 20 bis 30 % |

\* = Klebfestigkeit nach Europanorm 204, Mai 1991

# EP 1 173 490 B1

**Patentansprüche**

1. Verwendung des Copolymeren, erhältlich durch radikalische Copolymerisation von mindestens zwei Komponenten A und B, wobei

   a) mindestens ein Ester einer mindestens difunktionellen und mindestens eine olefinisch ungesättigte Doppelbindung aufweisenden Carbonsäure mit einem Alkylenoxidaddukt als Komponente A und
   b) mindestens ein weiteres radikalisch polymerisierbares Monomeres aus der Gruppe Vinylester von Carbonsäuren mit 2 bis 44 C-Atomen, Ethylen oder Propylen als Komponente B

   eingesetzt wird, als Bindemittel in Klebstoffzubereitungen, Dichtstoffen oder Redispersionspulvem.

2. Verwendung nach Anspruch 1, **dadurch gekennzeichnet, daß** als Komponente A ein Partialester, der mindestens eine Carboxylgruppe und mindestens ein Alkylenoxidaddukt mit mindestens 8 C-Atomen aufweist, eingesetzt wird.

3. Verwendung nach Anspruch 1 oder 2, **dadurch gekennzeichnet, daß** als Komponente A ein Ester der Maleinsäure, Fumarsäure, Citraconsäure, Itaconsäure, Arconitsäure, 3,4,5,6-Tetrahydrophthalsäure, oder ein Gemisch aus zwei oder mehr davon, eingesetzt wird.

4. Verwendung nach einem der Ansprüche 1 bis 3, **dadurch gekennzeichnet, daß** mindestens ein Alkylenoxidaddukt in Komponente A einen HLB-Wert von etwa 2 bis etwa 20 aufweist.

5. Verwendung nach einem der Ansprüche 1 bis 4, **dadurch gekennzeichnet, daß** als Komponente B ein Vinylester von Carbonsäuren mit 2 bis 44 C-Atomen eingesetzt wird.

6. Verwendung nach einem der Ansprüche 1 bis 5, **dadurch gekennzeichnet, daß** bei der Copolymerisation 0,1 bis 70 Gew.-% Komponente A im Polymerisationsgemisch vorliegen.

7. Verwendung nach einem der Ansprüche 1 bis 6, **dadurch gekennzeichnet, daß** zur Herstellung eines Copolymeren mindestens zwei Komponenten A und B copolymerisiert werden, wobei

   a) mindestens ein Ester einer mindestens difunktionellen und mindestens eine olefinisch ungesättigte Doppelbindung aufweisenden Carbonsäure mit einem Alkylenoxidaddukt als Komponente A und
   b) mindestens ein weiteres radikalisch polymerisierbares Monomeres als Komponente B

   eingesetzt wird.

8. Verwendung nach Anspruch 1 bis 7 in einer Zubereitung, die mindestens 0,1 Gew.-% eines Copolymeren enthält.

9. Verwendung eines Copolymeren nach einem der Ansprüche 1 bis 8 als Bindemittel in Klebstoffzubereitungen.

**Claims**

1. Use of the copolymer obtainable by free-radical copolymerization of at least two components A and B, where

   a) at least one ester of an at least difunctional carboxylic acid containing at least one olefinically unsaturated double bond with an alkylene oxide adduct is used as component A and
   b) at least one further free-radically polymerizable monomer from the group consisting of vinyl esters of carboxylic acids having 2 to 44 carbon atoms, ethylene and propylene is used as component B,

   as binders in adhesive formulations, sealants or redispersible powders.

2. Use according to Claim 1, **characterized in that** a partial ester containing at least one carboxyl group and at least one alkylene oxide adduct having at least 8 carbon atoms is used as component A.

3. Use according to Claim 1 or 2, **characterized in that** an ester of maleic acid, fumaric acid, citraconic acid, itaconic acid, aconitic acid, 3,4,5,6-tetrahydrophthalic acid, or a mixture of two or more thereof, is used as component A.

**4.** Use according to one of Claims 1 to 3, **characterized in that** at least one alkylene oxide adduct in component A has an HLB of from about 2 to about 20.

**5.** Use according to one of Claims 1 to 4, **characterized in that** a vinyl ester of carboxylic acids having 2 to 44 carbon atoms is used as component B.

**6.** Use according to one of Claims 1 to 5, **characterized in that** on copolymerization from 0.1 to 70% by weight of component A is present in the polymerization mixture.

**7.** Use according to one of Claims 1 to 6, **characterized in that** a copolymer is prepared by copolymerizing at least two components A and B, where

a) at least one ester of an at least difunctional carboxylic acid containing at least one olefinically unsaturated double bond with an alkylene oxide adduct is used as component A and
b) at least one further free-radically polymerizable monomer is used as component B.

**8.** Use according to Claim 1 to 7 in a formulation containing at least 0.1% by weight of a copolymer.

**9.** Use of a copolymer according to one of Claims 1 to 8 as a binder in adhesive formulations.

**Revendications**

**1.** Utilisation du copolymère que l'on peut obtenir par copolymérisation radicalaire d'au moins deux composants A et B, où l'on utilise

a) au moins un ester d'un acide carboxylique au moins bifonctionnel et présentant au moins une double liaison oléfiniquement insaturée avec un produit d'addition d'oxyde d'alkylène comme composant A et
b) au moins un autre monomère polymérisable par voie radicalaire, du groupe des esters vinyliques d'acides carboxyliques comportant de 2 à 44 atomes de carbone, de l'éthylène ou du propylène comme composant B,

comme liant dans des préparations d'adhésifs, des matériaux d'étanchéité ou des poudres de dispersion.

**2.** Utilisation selon la revendication 1, **caractérisée en ce qu'**on utilise comme composant A un ester partiel qui présente au moins un groupe carboxyle et au moins un produit d'addition d'oxyde d'alkylène comportant au moins 8 atomes de carbone.

**3.** Utilisation selon la revendication 1 ou 2, **caractérisée en ce qu'**on utilise comme composant A un ester de l'acide maléique, de l'acide fumarique, de l'acide citraconique, de l'acide itaconique, de l'acide arconitique, de l'acide 3,4,5,6-tétrahydrophtalique ou un mélange de deux ou plusieurs d'entre eux.

**4.** Utilisation selon l'une des revendications 1 à 3, **caractérisée en ce qu'**au moins un produit d'addition d'oxyde d'alkylène dans le composant A présente une valeur d'équilibre hydrophile-lipophile (EHL) d'environ 2 à environ 20.

**5.** Utilisation selon l'une des revendications 1 à 4, **caractérisée en ce qu'**on utilise comme composant B un ester vinylique d'acides carboxyliques comportant de 2 à 44 atomes de carbone.

**6.** Utilisation selon l'une des revendications 1 à 5, **caractérisée en ce que** dans la copolymérisation on trouve de 0,1 à 70% en poids de composant A dans le mélange de polymérisation.

**7.** Utilisation selon l'une des revendications 1 à 6, **caractérisée en ce que** pour la production d'un copolymère on copolymérise au moins deux composants A et B, opération dans laquelle on utilise

a) au moins un ester d'un acide carboxylique au moins bifonctionnel et présentant au moins une double liaison oléfiniquement insaturée avec un produit d'addition d'oxyde d'alkylène comme composant A et
b) au moins un autre monomère polymérisable par voie radicalaire comme composant B.

**8.** Utilisation selon les revendications 1 à 7 dans une préparation qui contient au moins 0,1% en poids d'un copolymère.

**9.** Utilisation d'un copolymère selon l'une des revendications 1 à 8 comme liant dans des préparations d'adhésif.